# EUROPEAN PATENT SPECIFICATION

(11) **EP 0 538 880 B1**
(45) Date of publication and mention of the grant of the patent: **03.03.1999**
(21) Application number: 92118185.5
(22) Date of filing: 23.10.1992
(51) Int. Cl.: C08G 65/32, C08K 5/09

(54) **Curable resin composition**
Härbare Harzzusammensetzung
Composition de résine durcissable

(30) Priority: 24.10.1991 JP 277981/91
(43) Date of publication of application: 28.04.1993
(73) Proprietor: Kanegafuchi Chemical Industry Co., Ltd., Kita-ku Osaka-shi Osaka-fu (JP)
(72) Inventor: Suzuki, Mikiko, Takasago-shi, Hyogo-ken (JP); Wakabayashi, Hiroshi, Kobe-shi, Hyogo-ken (JP)
(74) Representative: Hansen, Bernd, Dr. Dipl.-Chem.

(56) References cited:
- EP-A- 0 035 049
- EP-A- 0 108 946
- EP-A- 0 532 048
- DE-A- 2 927 807
- CHEMICAL ABSTRACTS, vol. 85, no. 2, 12 July 1976, Columbus, Ohio, US; abstract no. 7037f, ISAYAMA ET AL 'Oxyalkylene polymers containing silicon atoms at chain ends' page 78 ;

## Description

### BACKGROUND OF THE INVENTION

### Field of the Invention

The present invention relates to a curable resin composition comprising an oxyalkylene base polymer having at least one silicon atom-containing group to the silicon atom of which a hydroxyl group and/or a hydrolyzable group is attached and which is cross-linked through formation of a siloxane bond (hereinafter referred to as "silicon-containing reactive group").

### Description of the Related Art

An oxyalkylene base polymer having at least one silicon-containing reactive group is disclosed in, for example, Japanese Patent Kokai Publication No. 73998/1977 and corresponding U.S. Patent No. 3,971,751, and one of typical examples is represented by the formula:

X''₃Si―(oxyproylene polymer chain)―SiX''₃

wherein X'' is a hydrolyzable group such as a methoxy group.

Like a room temperature-curable silicone rubber, the oxyalkylene polymer having the silicon-containing reactive group is cured at room temperature through the formation of the siloxane bond between the polymer chains by the action of moisture in an air to give a rubbery cured material. Since the cured material has excellent elongation, strength and adhesion properties, it is used as a sealant and an adhesive.

The oxyalkylene polymer having the silicon-containing reactive group is used in the form of a one-pack type composition containing a curing catalyst (i.e. a silanol condensation catalyst) and other additives. As the curing catalyst of the one-pack type composition, a cheap tetravalent tin compound is often used.

The oxyalkylene polymer having the silicon-containing reactive group is often used in the form of a composition containing a filler to reduce a cost. However, the addition of the filler increases a viscosity of the composition, the use of a plasticizer in combination is essential.

Usually, the use of the filler and the plasticizer causes various problems. In particular, the decrease of storage stability, in particular the decrease of a curing rate after storage is a practically big problem. The plasticizer decreases the curing rate greatly.

As a curable resin composition comprising both a silanol condensation catalyst and an organic carboxylic acid, EP-A-0 370 531 and U.S. Patent No. 4,507,469 disclose such composition. The composition of EP-A-0 370 531 is a two-pack type composition. EP-A-0 370 531 discloses the retardation of curing after storage when a filler is used, but does not disclose the retardation of the curing when a plasticizer is used.

The composition of U.S. Patent No. 4,507,469 contains a divalent tin compound but not a tetravalent tin compound. This Patent does not disclose the acceleration of curing of the composition by the addition of a carboxylic acid when the composition contains a plasticizer.

### SUMMARY OF THE INVENTION

An object of the present invention is to provide a curable resin composition which can be cured quickly in Use even after a long-term storage.

According to the present invention, there is provided a one-pack type curable resin composition comprising:
(A) an oxyalkylene base polymer having at least one silicon atom-containing group whose silicon atom is attached to a hydroxyl group or a hydrolyzable group,
(B) a filler,
(C) a plasticizer,
(D) a curing catalyst comprising a tetravalent tin compound, and
(E) an organic carboxylic acid in an amount of 0.01-10 parts by weight per 100 parts by weight of the oxyalkylene base polymer (A), excluding a fatty acid used to surface treat a calcium carbonate filler.

### DETAILED DESCRIPTION OF THE INVENTION

The silicon-containing reactive group which is contained in the oxyalkylene base polymer (A) is not limited in the present invention. A typical example of the silicon-containing reactive group is a group of the formula: 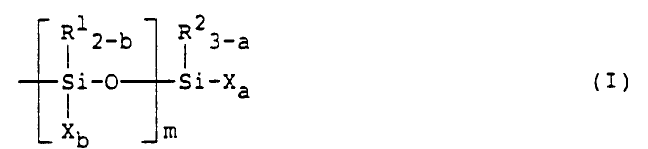 wherein R¹ and R² are the same or different and each an alkyl group having 1 to 20 carbon atoms, an aryl group having 6 to 20 carbon atoms, an aralkyl group having 7 to 20 carbon atoms or a triorganosiloxy group of the formula:

(R')₃SiO- (II)

in which R' is a monovalent hydrocarbon group having 1 to 20 carbon atoms provided that three R' groups may be the same or different; X is a hydroxyl group or a hydrolyzable group provided that when two or more X groups are present, they may be the same or different; a is 0, 1, 2 or 3; b is 0, 1 or 2 provided that b in different groups in the brackets may be the same or different; m is an integer of 0 to 19 provided that a sum of a and all b's is at least one.

The hydrolyzable group X is not limited and may be any of known hydrolyzable groups. Specific examples of the hydrolyzable group are hydrogen atom, a halogen atom, an alkoxy group, an acyloxy group, a ketoximate group, an amino group, an amido group, an acid amido group, an aminoxy group, a mercapto group and an alkenyloxy group. Among them, a hydrogen atom, an alkoxy group, an acyloxy group, a ketoximate group, an amino group, an amido group, a aminoxy group, a mercapto group and an alkenyloxy group are preferred. In view of mild hydrolysis and easy handling, an alkoxy group is particularly preferred.

To one silicon atom, one, two or three hydrolyzable groups or hydroxyl groups can be attached, and the sum of a and all b's is preferably from 1 to 5. When two or more hydrolyzable groups or hydroxyl groups are attached to the same silicon atom, they may be the same or different.

The silicon-containing reactive group may contain one or more silicon atoms. In a case of the silicon-containing reactive group in which the silicon atoms are bonded though siloxane linkages, the number of the silicon atoms may be up to 20.

In view of easy availability, a silicon-containing reactive group of the formula: 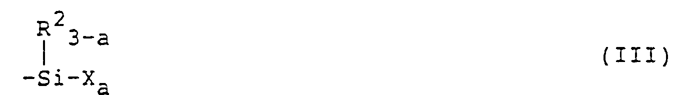 wherein R², X and a are the same as defined above is preferred.

Specific examples of R¹ and R² in the formula (I) are an alkyl group (e.g. a methyl group, an ethyl group), a cycloalkyl group (e.g. a cyclohexyl group), an aryl group (e.g. a phenyl group), an aralkyl group (e.g. a benzyl group) and a triorganosiloxy group of the formula (II) in which R' is a methyl group or a phenyl group. As R¹, R² and R', a methyl group is particularly preferred.

Preferably, one molecule of the polymer (A) contains at least one silicon-containing reactive group, more preferably 1.1 to 5 silicon-containing reactive groups on the average.

When the number of the silicon-containing reactive group is less than one, the curability of the composition is insufficient and the cured material does not exhibit good rubbery properties.

The silicon-containing reactive group may be present at an end of the polymer chain or on the polymer chain or both. In particular, when the silicon-containing reactive group is present at the chain end of the polymer, the final cured material has a large effective network chain amount so that a rubbery cured material having a high strength and a large elongation is easily obtained.

In general, a main chain of the oxyalkylene base polymer (A) comprises repeating units of the formula:

-R³-O-

wherein R³ is a divalent organic group. As the R³ group, a divalent alkyl group having 1 to 10 carbon atom, in particular 2 to 4 carbon atoms is preferred. A part of the hydrogen atoms of the alkyl group may be substituted with a substituent such as a chlorine atom. Specific examples of the R³ group are 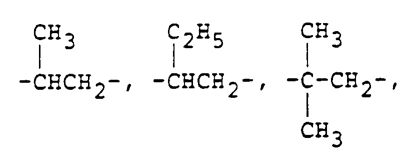 -CH₂CH₂, -CH₂CH₂CH₂CH₂-. Among them, -CH(CH₃)-CH₂- is preferred.

The oxyalkylene base polymer (A) may have one kind of the repeating unit, though it may have two or more kinds of the repeating units. The oxyalkylene base polymer (A) may containing repeating units other than the repeating units: -R³-O-. In this case, an amount of the repeating units: -R³-O- is preferably at least 50 % by weight, more preferably at least 80 % by weight.

A number average molecular weight (Mn) of the oxyalkylene polymer (A) is not limited and usually at least 700, preferably 1000 to 60,000, more preferably 3000 to 30,000.

The silicon-containing reactive group is introduced in the polymer by any of conventional methods. For example, the following methods may be used:
(1) With an oxyalkylene polymer having a functional group such as a hydroxyl group at a chain end, an organic compound having an unsaturated group and an active group which is reactive with the functional group of the polymer is reacted and then a product is reacted with a hydrosilane having a hydrolyzable group to effect hydrosilylation of the polymer.
(2) With an oxyalkylene polymer having a functional group such as a hydroxyl group, an epoxy group or an isocyanate group (hereinafter referred to as "Y functional group"), a compound having a silicon-containing reactive group and a functional group which is reactive with the Y functional group (hereinafter referred to as "Y' functional group").

Specific examples of the compound having the Y' functional group are amino group-containing silanes (e.g. γ-(2-aminoethyl)aminopropyltrimethoxysilane, γ-(2-aminoethyl)aminopropylmethyldimethoxysilane, γ-aminopropyltriethoxysilane), mercapto group-containing silanes (e.g. γ-mercaptopropyltrimethoxysilane, γ-mercaptopropylmethyldimethoxysilane), epoxysilanes (e.g. γ-glycidoxypropyltrimethoxysilane, β-(3,4-epoxycyclohexyl)ethyltrimethoxysilane), vinyl type unsaturated group-containing silanes (e.g. vinyltriethoxysilane, γ-methacryloyloxypropyltrimethoxysilane, γ-acryloyloxypropylmethyldimethoxysilane), chlorine atom-containing silanes (e.g. γ-chloropropyltrimethoxysilane), isocyanate group-containing silanes (e.g. γ-isocyanatepropyltriethoxysilane, γ-isocyanatepropylmethyldimethoxysilane), hydrosilanes (e.g. methyldimethoxysilane, trimethoxysilane, methyldiethoxysilane).

Among the above methods, the method (1) and the method (2) in which the polymer having the terminal hydroxyl group and the compound having the isocyanate group and the silicon-containing reactive group are reacted are preferred.

The filler (B) is not limited. Specific examples of the filler are reinforcing fillers (e.g. fumed silica, precipitated silica, anhydrous silicic acid, hydrous silicic acid, carbon black), fillers (e.g. calcium carbonate, magnesium carbonate, diatomaceous earth, calcined clay, clay, talc, titanium oxide, bentonite, organic bentonite, ferric oxide, zinc oxide and activated zinc oxide, hydrogenated castor oil, organic fillers such as PVC and polyolefin), fibrous fillers (e.g. asbestos, glass fiber and filament), inorganic and organic microballoons (e.g. SHIRASU balloons, glass balloons, SARAN balloons, phenol resin balloons).

The fillers may be used independently or as a mixture thereof.

The plasticizer (C) is not limited. Specific examples of the plasticizer are phthalates (e.g. dibutyl phthalate, diheptyl phthalate, di(2-ethylhexyl) phthalate, dioctyl phthalate, butylbenzyl phthalate, butylphthalylbutyl glycolate), non-aromatic dibasic acid esters (e.g. dioctyl adipate, dioctyl sebacate), esters of polyalkyleneglycol (e.g. diethyleneglycol dibenzoate, triethyleneglycol dibenzoate), phosphates (e.g. tricresyl phosphate, tributyl phosphate), chloroparaffins, hydrocarbon oils (e.g. alkyldiphenyl, partially hydrogenated terphenyl). They may be used independently or as a mixture thereof.

The plasticizer may be added to a polymerization system of the oxyalkylene base polymer (A).

Among the above plasticizers, the ester plasticizers are generally used and preferred in view of a low cost and a large effect on retardation of curing of the composition.

Typical examples of the tetravalent tin curing catalyst (D) are silanol condensation catalysts. Examples of the silanol condensation catalyst are tincarboxylic acid salts (e.g. dibutyltin dilaurate, dibutyltin maleate, dibutyltin diacetate, tin octylate, tin naphthenate), a reaction product of dibutyltin oxide and a phthalic acid ester and dibutyltin diacetylacetonate.

The curing catalyst is used in an amount of 0.1 to 20 parts by weight, preferably 1 to 10 parts by weight per 100 parts by weight of the oxyalkylene polymer having the silicon-containing reactive group (A). When the amount of the curing catalyst is too small, the curing rate tends to decrease. When the amount of the curing catalyst is too large, curing heat may be partially generated or bubbles may form so that a cured material may have deteriorated properties.

As the organic carboxylic acid (E), aliphatic monocarboxylic acids, aliphatic dicarboxylic acids, aliphatic polycarboxylic acids, aromatic carboxylic acids are used. Specific examples of these carboxylic acids are as follows:
(1) Aliphatic monocarboxylic acids
   (a) Saturated monocarboxylic acids such as formic acid, acetic acid, acetoacetic acid, ethylmethylacetic acid, propionic acid, butyric acid, isobutyric acid, 2-ethylbutyric acid, ethoxyacetic acid, valeric acid, isovaleric acid, hexanoic acid, 2-ethylhexanoic acid, octanoic acid, decanoic acid, undecanoic acid, glyoxylic acid, glycolic acid, gluconic acid,
   (b) Olefinic monocarboxylic acids such as acrylic acid, methacrylic acid, angelic acid, crotonic acid, isocrotonic acid, 10-undecenic acid, elaidic acid, erucic acid, oleic acid,
   (c) Acetylene monocarboxylic acids such as propiolic acid,
   (d) Diolefinic carboxylic acids such as linoleic acid, linoelaidic acid,
   (e) Highly unsaturated monocarboxylic acids such as linolenic acid, arachidonic acid,
   (f) Halogenated monocarboxylic acids such as chloroacetic acid, 2-chloroacrylic acid, chlorobenzoic acid.
(2) Aliphatic dicarboxylic acids
   (a) Saturated dicarboxylic acids such as adipic acid, azelaic acid, ethylmalonic acid, glutaric acid, oxalic acid, malonic acid, succinic acid, hydroxydiacetic acid,
   (b) Unsaturated dicarboxylic acids such as maleic acid, fumaric acid, acetylenedicaroxylic acid, itaconic acid.
(3) Aliphatic polycarboxylic acids
   Tricarboxylic acids such as aconic acid, citric acid, isocitric acid.
(4) Aromatic carboxylic acids
   (a) Aromatic monocarboxylic acids such as benzoic acid, 9-anthracenecarboxylic acid, atrolactinic acid, anisic acid, isopropylbenzoic acid, salicylic acid, toluic acid,
   (b) Aromatic polycarboxylic acids such as phthalic acid, isophthalic acid, terephthalic acid, carboxyphenylacetic acid, pyromellitic acid.
(5) Others
   Amino acids such as alanine leucine, threonine, aspartic acid, glutamic acid, arginine, cysteine, methionine, phenylalanine, tryptophane, histidine.

Insofar as at least one carboxyl group is present in one molecule, any compound can be used according to the present invention. The above carboxylic acids may be used independently or as a mixture of two or more of them.

Among the above exemplified carboxylic acids, the aliphatic monocarboxylic acids, in particular, those having 2 to 30 carbon atoms are preferred.

An amount of the carboxylic acid compound (E) is selected according to a desired curing rate and an intended degree of improvement of retardation of the curing after storage. The carboxylic acid compound (E) is present in an amount of from 0.01 to 10 parts by weight, preferably from 0.1 to 5 parts by weight per 100 parts by weight of the oxyalkylene polymer having the silicon-containing group (A) in view of a balance between the improvement and the cost.

If necessary, the curable resin composition of the present invention may contain a conventional additive such as a dehydrating agent, an adhesive, a physical property-adjusting agent, a storage-stability improver, an anti-aging agent, a UV-light absorber, a metal-deactivator, an ozonant, a light-stabilizer, an amine base radical chain transfer inhibitor, a phosphorus peroxide decomposer, a lubricant, a pigment and a foaming agent.

As the dehydrating agent, a compound which reacts with water, in particular a hydrolyzable silicon-containing compound is preferred. The hydrolyzable silicon-containing compound is used to mean a low molecular weight silicon-containing compound having a hydrolyzable functional group and preferably a molecular weight of 300 or less. This compound may have other functional group than the hydrolyzable functional group. Examples of the hydrolyzable group are an alkoxy group, an acyloxy group, a ketoximate group, an amino group, an aminoxy group, an amido group and an alkenyloxy group. Examples of the other functional group are an epoxy-containing group, an amino-containing group, an acryl-containing group and a mercapto-containing group.

Specific examples of such compound are Si(OC₂H₅)₄, CH₂=CHSi(OAC)₃, 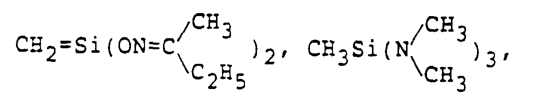 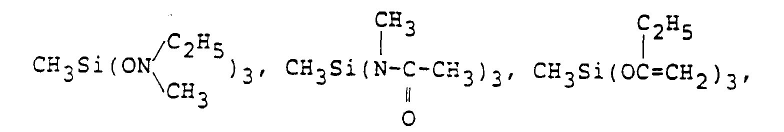 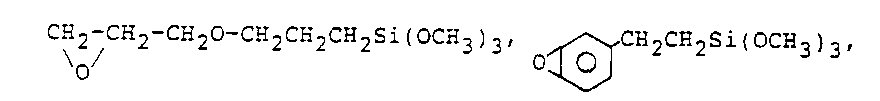 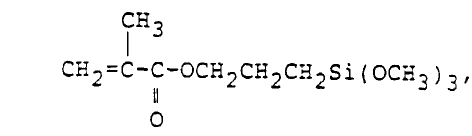 HSCH₂CH₂CH₂Si(OCH₃).

As an agent which functions as an adhesive and a dehydrating agent, an aminosilane compound can be used.

Specific examples of an amino group-substituted alkoxysilane or amino group-substituted alkoxysilane derivative as the aminosilane compound are amino group-substituted alkoxysilanes such as
H₂NCH₂CF₂CH₂Si(OCH₃)₃, H₂NCH₂CH₂NHCH₂CH₂CH₂Si(OCH₃)₃, 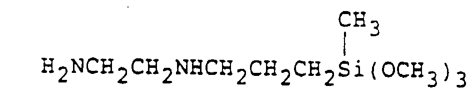 and (C₂H₅O)₃SiCH₂CH₂CH₂NH-CH₂CH₂NHCH₂CH₂CH₂Si(OC₂H₅)₃; reaction products of the above amino group-substituted alkoxysilanes with epoxysilane compounds such as 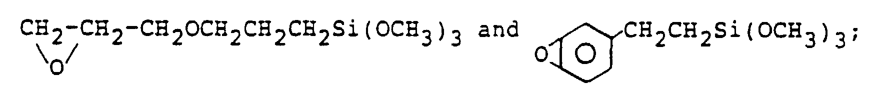 and reaction products of the above amino group-substituted alkoxysilanes with acryloylsilane compounds such as 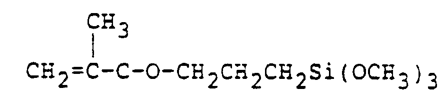 and

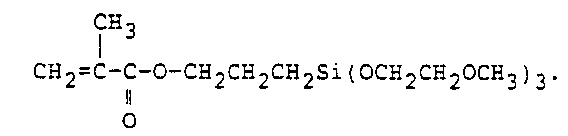

The reaction product of the amino group-substituted alkoxysilane and the epoxysilane or acryloylsilane compound is prepared by mixing one mole of the amino group-substituted alkoxysilane with 0.2 to 5 moles of the epoxysilane or acryloylsilane compound at a temperature from room temperature to 180°C for 1 to 8 hours.

Preferably, the above amino group-substituted alkoxysilane or its derivative is used in an amount of 0.01 to 20 parts by weight per 100 parts by weight of the oxyalkylene polymer having the silicon-containing reactive group (A).

The curable resin composition of the present invention may be prepared by any of conventional methods. For example, the above essential components and other optional components are kneaded with a mixer, rolls or a kneader at room or elevated temperature, or they are dissolved in a suitable amount of a solvent and mixed.

When the curable resin composition of the present invention is exposed to an air, it will form a three-dimensional network due to the function of moisture in the air and provide a cured solid material having rubbery elasticity.

The curable resin composition of the present invention is useful, in particular, as an elastic sealant and used as a sealing material for buildings, ships, automobiles and roads. With or without a primer, the curable resin composition of the present invention can adhere to various substrates such as glass, ceramics, woods, metals and resins. Therefore, the composition of the present invention can be used as a sealing or adhesive composition. Further, the composition of the present invention can be used as a tackifier, a coating, a water-proof coating, a food wrapping material, a casting rubber material, a templating material and a foaming material.

### PREFERRED EMBODIMENTS OF THE INVENTION

The present invention will be illustrated by the following Examples.

### Examples 1 and 2 and Comparative Example

A one-pack type resin composition containing components in amounts (parts by weight) shown in Table 1 was prepared using an oxypropylene polymer A having about two methyldimethoxysillyl groups [-Si(CH₃)(OCH₃)₂] on the average and a number average molecular weight of 9000 (MS Polymer manufactured by Kanegafuchi Chemical Industry Co., Ltd.) and an oxypropylene polymer B having about 1.5 methyldimethoxysillyl groups on the average and an average molecular weight of 8,000 (MS Polymer manufactured by Kanegafuchi Chemical Co., Ltd.), and storage stability of the composition was tested. The result is shown in Table 2.

A viscosity and a curing rate (tack-free time) were measured according to JIS A 5758.

**Table 1**

| Example No. | 1 | 2 | Comp. |
|---|---|---|---|
| Oxypropylene polymer A | 50 | 50 | 50 |
| Oxypropylene polymer B | 50 | 50 | 50 |
| Total | 100 | 100 | 100 |
| Fillers: | | | |
| Glue CaCO₃^{*1)} | 120 | 120 | 120 |
| Titanium oxide^{*2)} | 20 | 20 | 20 |
| Plasticizer DOP^{*3)} | 50 | 50 | 50 |
| Dehydrating agent VTMO^{*4)} | 3 | 3 | 3 |
| Adhesive DAMO^{*5)} | 2 | 2 | 2 |
| Curing catalyst U-220^{*6)} | 1 | 1 | 1 |
| Organic carboxylic acid: | | | |
| 2-Ethylhexanoic acid | 0.2 | 0 | 0 |
| Stearic acid | 0 | 0.4 | 0 |

| | | | |
|---|---|---|---|
| Notes: *1) CALFORT-S (manufactured by STURGE). | | | |
| *2) TIOFWE R85 (manufactured by TDF). | | | |
| *3) Dioctyl phthalate. | | | |
| *4) DYNASYLAN VTMO (manufactured by Huels). | | | |
| *5) DYNASYLAN DAMO (manufactured by Huels) | | | |
| *6) Dibutyltin diacetylacetonate (manufactured by Nitto Chemical Co., Ltd.) | | | |

**Table 2**

| Example No. | 1 | 2 | Comp. |
|---|---|---|---|
| Just after preparation: | Pa.s 1,000 | 1,100 | 950 |
| Viscosity (poise) | (10,000) | (11,000) | (9,500) |
| Tack-free time (hrs) | 5.5 | 4.5 | 2.5 |
| After storage at 50°C for 4 weeks: | Pa.s 1,400 | 1,300 | 1,200 |
| Viscosity (poise) | (14,000) | (13,000) | (12,000) |
| Tack-free time (hrs) | 5.5 | 5.0 | >10 |

As understood from the results in Table 2, the addition of the organic carboxylic acid decreased the retardation of the curing time (tack-free time) after the storage (at 50°C for 4 weeks).

Accordingly, the curable resin composition of the present invention can be cured quickly even after long-term storage.

## Claims

1. A one-pack type curable resin composition comprising:
(A) an oxyalkylene base polymer having at least one silicon atom-containing group whose silicon atom is attached to a hydroxyl group or a hydrolyzable group,
(B) a filler,
(C) a plasticizer,
(D) a curing catalyst ccmprising a tetravalent tin compound, and
(E) an organic carboxylic acid in an amount of 0.01-10 parts by weight per 100 parts by weight of the oxyalkylene base polymer (A), excluding a fatty acid used to surface treat a calcium carbonate filler.

2. A one-pack type curable resin composition according to Claim 1, wherein said silicon-containing group is a group of the formula: 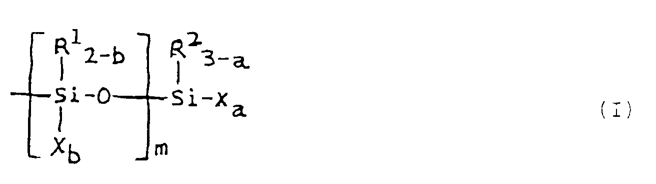 wherein R¹ and R² are the same or different and each is an alkyl group having 1 to 20 carbon atoms, an aryl group having 6 to 20 carbon atoms, an aralkyl group having 7 to 20 carbon atoms or a triorganosiloxy group of the formula:
(R')₃SiO- (II)
in which R' is a monovalent hydrocarbon group having 1 to 20 carbon atoms provided that three R' groups may be the same or different; X is a hydroxyl group or a hydrolyzable group provided that when two or more X groups are present, they may be the same or different; a is 0, 1, 2 or 3; b is 0, 1 or 2 provided b in different groups in the brackets may be the same or different; m is an integer of 0 to 19 provided that the sum of a and all b's is at least one.

3. A curable resin composition according to Claim 2, wherein said silicon-containing group is a group of the formula: 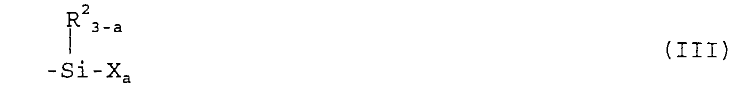 wherein R², X and a are the same as defined above.

4. A curable resin composition according to Claim 2, wherein said silicon-containing group is a group of the formula:
-Si(CH₃)(OCH₃)₂.

5. A curable resin composition according to Claim 1, wherein said oxyalkylene base polymer (A) is an oxypropylene polymer.

6. A curable resin composition according to Claim 1, wherein said filler (B) is calcium carbonate.

7. A curable resin composition according to Claim 1, wherein said plasticizer (C) is an ester plasticizer.

8. A curable resin composition according to Claim 7, wherein said ester plasticizer is di(2-ethylhexyl) phthalate.

9. A curable resin composition according to Claim 1, wherein said tetravalent tin compound is a dialkyl-tin dicarboxylic acid salt.

10. A curable resin composition according to Claim 1, wherein said organic carboxylic acid (E) is an aliphatic monocarboxylic acid having 2 to 30 carbon atoms.

## Patentansprüche

1. Härtbare Harzzusammensetzung des Einkomponenten-Typs, umfassend
(A) ein Polymer auf Oxyalkylenbasis, das mindestens eine siliciumatomhaltige Gruppe, deren Siliciumatom an eine Hydroxyl-Gruppe oder eine hydrolysierbare Gruppe gebunden ist, hat,
(B) einen Füllstoff,
(C) einen Weichmacher,
(D) einen Härtekatylsator, der eine vierwertige Zinn-Verbindung enthält, und
(E) eine organische Carbonsäure in einer Menge von 0,01 bis 10 Gew.-Teilen pro 100 Gew.-Teile des Polymers (A) auf Oxyalkylenbasis, ausgenommen eine Fettsäure, die zur Oberflächenbehandlung eines Calciumcarbonat-Füllstoffs verwendet wird.

2. Härtbare Harzzusammensetzung des Einkomponenten-Typs nach Anspruch 1, in der die siliciumhaltige Gruppe eine Gruppe der Formel: 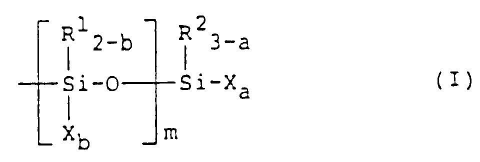 ist, worin R¹ und R² gleich oder verschieden sind und jeweils eine Alkyl-Gruppe mit 1 bis 20 Kohlenstoffatomen, eine Aryl-Gruppe mit 6 bis 20 Kohlenstoffatomen, eine Aralkyl-Gruppe mit 7 bis 20 Kohlenstoffatomen oder eine Triorganosiloxy-Gruppe der folgenden Formel:
(R')₃SiO- (II)
in welcher R' eine einwertige Kohlenwasserstoff-Gruppe mit 1 bis 20 Kohlenstoffatomen ist, sind, vorausgesetzt, daß drei R'-Gruppen gleich oder verschieden sein können;
X eine Hydroxyl-Gruppe oder eine hydrolysierbare Gruppe ist, vorausgesetzt, daß wenn zwei oder mehr X-Gruppen vorliegen, diese gleich oder verschieden sein können; a 0, 1, 2 oder 3 ist; b 0, 1 oder 2 ist, vorausgesetzt, daß b in unterschiedlichen Gruppen in den Klammern gleich oder verschieden sein kann; m eine ganze Zahl von 0 bis 19 ist, vorausgesetzt, daß die Summe von a und allen b's mindestens 1 ist.

3. Härtbare Harzzusammensetzung nach Anspruch 2, in der die siliciumhaltige Gruppe eine Gruppe der Formel: 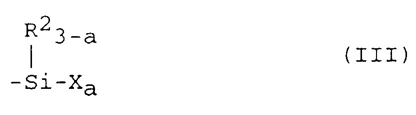 worin R², X und a wie oben definiert sind, ist.

4. Härtbare Harzzusammensetzung nach Anspruch 2, in der die siliciumhaltige Gruppe eine Gruppe der Formel:
-Si(CH₃)(OCH₃)₂
ist.

5. Härtbare Harzzusammensetzung nach Anspruch 1, in der das Polymer (A) auf Oxyalkylen-Basis ein Oxypropylen-Polymer ist.

6. Härtbare Harzzusammensetzung nach Anspruch 1, in der der Füllstoff (B) Calciumcarbonat ist.

7. Härtbare Harzzusammensetzung nach Anspruch 1, in der der Weichmacher (C) ein Ester-Weichmacher ist.

8. Härtbare Harzzusammensetzung nach Anspruch 7, in der der Ester-Weichmacher Di(2-ethylhexyl)phthalat ist.

9. Härtbare Harzzusammensetzung nach Anspruch 1, in der die vierwertige Zinn-Verbindung ein Dialkylzinndicarbonsäuresalz ist.

10. Härtbare Harzzusammensetzung nach Anspruch 1, in der die organische Carbonsäure (E) eine aliphatische Monocarbonsäure mit 2 bis 30 Kohlenstoffatomen ist.

## Revendications

1. Composition de résine durcissable du type à un conditionnement, comprenant :
(A) un polymère de base oxyalkylène, ayant au moins un groupe à atome de silicium dont l'atome de silicium est fixé à un groupe hydroxyle ou un groupe hydrolysable,
(B) une charge,
(C) un plastifiant,
(D) un catalyseur de durcissement comprenant un composé d'étain tétravalent, et
(E) un acide carboxylique organique, en une proportion de 0,01 à 10 parties en poids pour 100 parties en poids du polymère de base oxyalkylène (A), à l'exclusion d'un acide gras utilisé pour traiter en surface une charge de carbonate de calcium.

2. Composition de résine durcissable du type à un conditionnement selon la revendication 1, dans laquelle ledit groupe à atome de silicium est un groupe de formule : 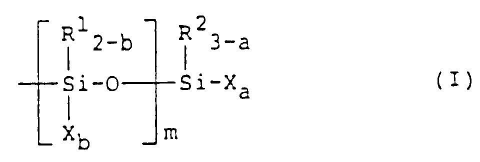 dans laquelle R¹ et R² sont identiques ou différents et chacun est un groupe alkyle ayant 1 à 20 atomes de carbone, un groupe aryle ayant 6 à 20 atomes de carbone, un groupe aralkyle ayant 7 à 20 atomes de carbone ou un groupe triorganosiloxy de formule :
(R')₃SiO- (II)
dans laquelle R' est un groupe hydrocarboné monovalent ayant 1 à 20 atomes de carbone, à condition que trois groupes R' puissent être identiques ou différents ; X est un groupe hydroxyle ou un groupe hydrolysable, sous réserve que, lorsque deux ou plusieurs groupes X sont présents, ils peuvent être identiques ou différents ; a est 0, 1, 2 ou 3 ; b est 0, 1 ou 2, sous réserve que b dans des groupes différents entre crochets peuvent être identiques ou différents ; m est un entier de 0 à 19, sous réserve que la somme de a et de tous les b soit d'au moins un.

3. Composition de résine durcissable selon la revendication 2, dans laquelle ledit groupe à atome de silicium est un groupe de formule : 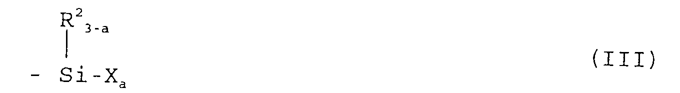 dans laquelle R², X et a sont tels que définis ci-dessus.

4. Composition de résine durcissable selon la revendication 2, dans laquelle ledit groupe à atome de silicium est un groupe de formule :
-Si(CH₃)(OCH₃)₂.

5. Composition de résine durcissable selon la revendication 1, dans laquelle ledit polymère de base oxyalkylène (A) est un polymère d'oxypropylène.

6. Composition de résine durcissable selon la revendication 1, dans laquelle ladite charge (B) est du carbonate de calcium.

7. Composition de résine durcissable selon la revendication 1, dans laquelle ledit plastifiant (C) est un plastifiant ester.

8. Composition de résine durcissable selon la revendication 7, dans laquelle ledit plastifiant ester est le phtalate de di(2-éthylhexyle).

9. Composition de résine durcissable selon la revendication 1, dans laquelle ledit composé d'étain tétravalent est un sel de dialkylétain d'acide dicarboxylique.

10. Composition de résine durcissable selon la revendication 1, dans laquelle ledit acide carboxylique organique (E) est un acide monocarboxylique aliphatique ayant 2 à 30 atomes de carbone.
